Europäisches Patentamt

(19) European Patent Office

Office européen des brevets

(11) EP 0 544 346 B1

(12) FASCICULE DE BREVET EUROPEEN

(45) Date de publication et mention
de la délivrance du brevet:
**11.09.1996 Bulletin 1996/37**

(51) Int. Cl.$^6$: **B25J 9/16**, G05B 19/4103

(21) Numéro de dépôt: 92203271.9

(22) Date de dépôt: 26.10.1992

(54) **Procédé de génération de trajectoire pour un système robotisé**

Verfahren zur Erzeugung einer Bewegungsbahn für ein robotisiertes System

Patch generation method for a robotised system

(84) Etats contractants désignés:
**BE CH DE ES GB IT LI NL SE**

(30) Priorité: **28.10.1991 FR 9113250**

(43) Date de publication de la demande:
**02.06.1993 Bulletin 1993/22**

(73) Titulaire: **COMMISSARIAT A L'ENERGIE ATOMIQUE**
**75015 Paris (FR)**

(72) Inventeurs:
• **Sgarbi, Frédéric**
**F-75016 Paris (FR)**
• **Cammoun, Riadh**
**F-92160 Antony (FR)**

(74) Mandataire: **Ilgart, Jean-Christophe et al**
**c/o Société Brevatome,**
**25, rue de Ponthieu**
**F-75008 Paris (FR)**

(56) Documents cités:
EP-A- 0 364 057    US-A- 3 748 563
US-A- 4 035 706

• THE INTERNATIONAL JOURNAL OF ROBOTICS RESEARCH, vol. 4, no. 3, 1985, pages 3- 17, Cambridge, GB; J.E. BOBROW et al.: "Time-optimal control of robotic manipulators along specified paths"
• PROCEEDINGS 1986 IEEE INTERNATIONAL CONFERENCE ON ROBOTICS AND AUTOMATION, San Francisco, California, 7-10 avril 1986, vol. 3, pages 1399-1405; F. PFEIFFER et al.: "A concept for manipulator trajectory planning"
• IEEE JOURNAL OF ROBOTICS AND AUTOMATION, vol. 4, no. 4, août 1988, pages 380- 385, New York, US; J. ANGELES et al.: "Trajectory planning in robotics continous-path applications"

## Description

L'invention se rapporte à un procédé de génération de trajectoire pour un système robotisé comprenant un nombre quelconque d'organes mobiles qui participent à l'accomplissement de la trajectoire.

Les trajectoires de robotique sont définies par des successions de tronçons qui sont joints par des points de passage où le système est à un état déterminé. Il arrive très fréquemment que la trajectoire résulte en réalité de la superposition de plusieurs mouvements effectués par des organes mobiles différents ou par un même organe mobile. Un exemple élémentaire est celui d'un outil d'usinage tel qu'une meule ou une fraise à l'extrémité d'un bras de robot : un des mouvements est le déplacement de la fraise ou de son centre sur une trajectoire curviligne et un autre mouvement est son orientation ; ces mouvements sont accomplis de manière presque découplée par le bras de robot et par la rotation du poignet au bout de ce bras respectivement.

Certaines insuffisances des procédés habituels de génération de trajectorie restreignent les capacités des systèmes robotisés. La méthode utilisée habituellement pour la génération de trajectoires consiste à définir une vitesse de parcours du tronçon pour chaque mouvement. Les mouvements comprennent alors une phase d'accélération, une phase à vitesse constante et une phase de décélération. Cette méthode implique de ne pas pouvoir varier la vitesse du mouvement en temps réel. Il est de plus nécessaire d'effectuer des calculs préliminaires pour définir les temps de parcours des trois phases ainsi que les distances de portions de parcours correspondantes en fonction des valeurs autorisées d'accélération et de décélation. Ces calculs doivent être effectués une fois pour toutes et il n'est pas possible en pratique de les refaire quand le parcours de la trajectoire a été commencé, ce qui signifie qu'il est impossible de modifier la vitesse et que le mouvement est donc figé dès le départ.

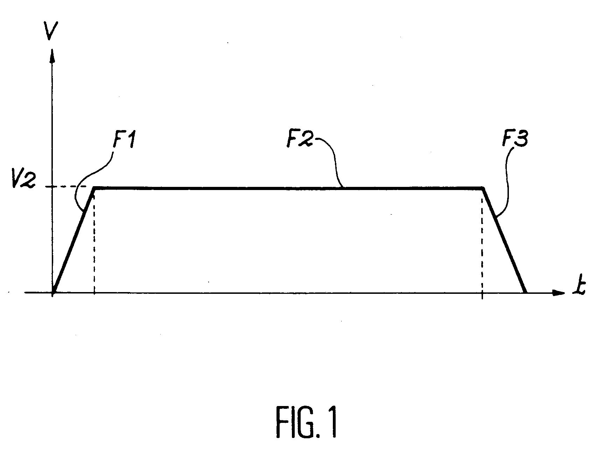

La figure 1 résume ce mode de génération de trajectoire : il s'agit d'un diagramme de vitesses en fonction du temps et les trois phases successives sont repérées par F1, F2 et F3, les pentes de F1 et F3 étant imposées de même que V2 (accélération, décélération et vitesse maximales).

L'objet de l'invention est un procédé amélioré qui permet en particulier la génération automatique de trajectoire en temps direct, c'est-à-dire dont la vitesse d'avance n'est pas forcément connue à l'avance et peut être par exemple contrôlée par un capteur qui précède l'outil d'usinage et indique la présence ou la taille d'une bavure. Pour cela un des mouvements est un mouvement principal pour lequel chaque tronçon est parcouru à une vitesse limitée en fonction d'une accélération et d'une décélération maximales associées au mouvement principal pour ne pas dépasser une vitesse maximale à la fin du tronçon actuellement parcouru, la vitesse maximale étant calculée de façon à pouvoir arrêter les organes mobiles dont le système robotisé est composé à la fin du tronçon suivant, comme dans le document US-A-3 748 563 qui sert de préambule à la revendication 1 ; et les autres mouvements sont des mouvements asservis au mouvement principal et parcourus à des vitesses variables et calculées en fonction de la vitesse variable sur le mouvement principal pour que tous les mouvements aboutissent simultanément à la fin de chaque tronçon, c'est-à-dire se terminent ensemble. L'accélération et la décélération maximales, qui peuvent être choisies par le concepteur du système, permettent des mouvements souples et ont de véritables propriétés de filtre mécanique des variations trop brusques des commandes.

Les vitesses des mouvements asservis sont calculées de façon que la proportion de tronçon parcourue par chacun desdits mouvements asservis converge vers la proportion de tronçon parcourue au même instant par le mouvement principal, si nécessaire à une accélération ou une décélération maximale jusqu'à ce que lesdites proportions coïncident.

On va maintenant passer aux figures suivantes qui illustrent l'invention de manière non limitative :

- la figure 1 représente le déroulement d'une génération de trajectoire selon le procédé antérieur,
- la figure 2 représente un exemple d'application de l'invention,
- la figure 3 représente le mode d'obtention du mouvement principal de la trajectoire,
- la figure 4 représente un diagramme de synchronisation des mouvements, et
- la figure 5 illustre le mode d'obtention de mouvement de rotation.

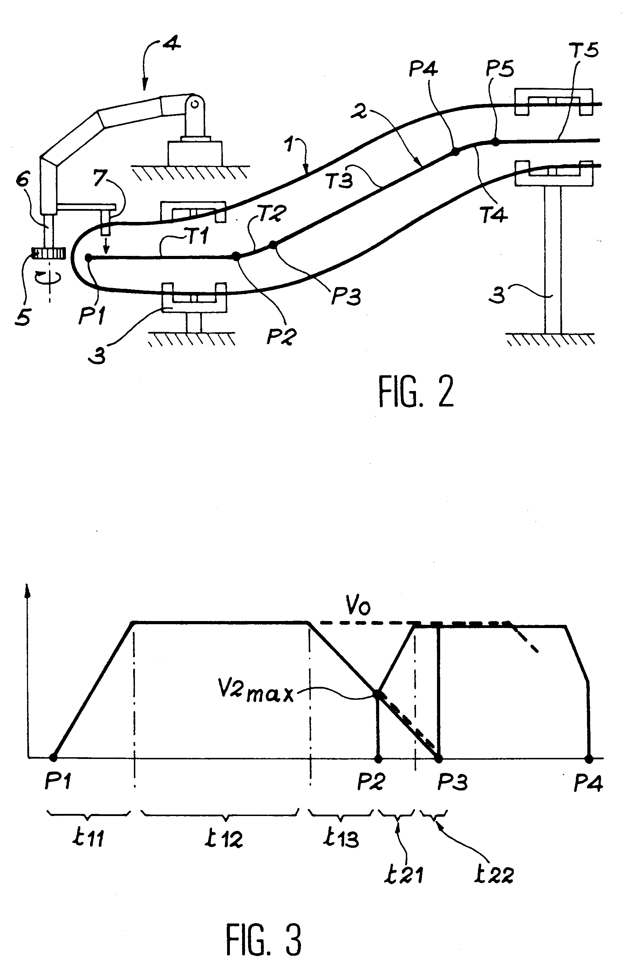

On a représenté sur la figure 2 une pièce 1 de forme sinueuse et obtenue par moulage de sorte qu'une bavure 2 qu'il convient d'ôter est apparue. On suppose que la bavure 2 a un raccordement à la pièce 1 qui s'étend dans le plan de la figure et se compose de deux portions horizontales de niveau différent séparées par une portion de transition. La pièce 1 est bridée et maintenue fixe par rapport au sol par des étaux 3. Un robot 4 dont on a représenté le bras porte un outil 5 qui peut être une fraise ou une meule et qui tourne autour d'un axe 6. L'outil 5 doit être promené le long de la base de la bavure 2 et l'axe 6 doit rester autant que possible perpendiculaire à la direction de la portion soumise à l'ébavurage. Ces conditions définissent donc deux mouvements différents de l'outil 5. La trajectoire est connue à l'avance, programmée de commande du bras 4, mais il est possible de faire varier la vitesse de parcours en temps réel grâce à un capteur 7 qui précède de peu l'outil 5 et évalue la largeur ou l'épaisseur de la bavure. Un exemple simple de capteur 7 est décrit dans le brevet français 2 649 630.

La bavure 2 (et la trajectoire) peut ainsi être décomposée dans cet exemple en trois tronçons principaux rectilignes : un premier tronçon horizontal T1, un tronçon oblique T3 et un second tronçon horizontal T5. Ces trois tronçons rectilignes sont reliés successivement par deux tronçons en arc de cercle ou de raccordement T2 et T4. Les tronçons T forment donc une chaîne ininterrompue et sont reliés par des points de passage P : P1 est le point de départ du tronçon T1, P2 du tronçon T2, etc., et réciproquement chaque tronçon T se termine sur le point de passage P suivant. On conçoit que des modifications de la vitesse de déplacement de l'outil 5 doivent être introduites pour limiter l'effort de coupe lorsque la bavure croît, car les bavures peuvent avoir des variations importantes et imprévisibles d'épaisseur ou de largeur qui imposent de parcourir les tronçons à des vitesses d'avance différentes. Mais cette situation (qui impliquerait par exemple de fractionner des tronçons rectilignes n'a pas été illustrée car le déroulement du procédé reste le même.

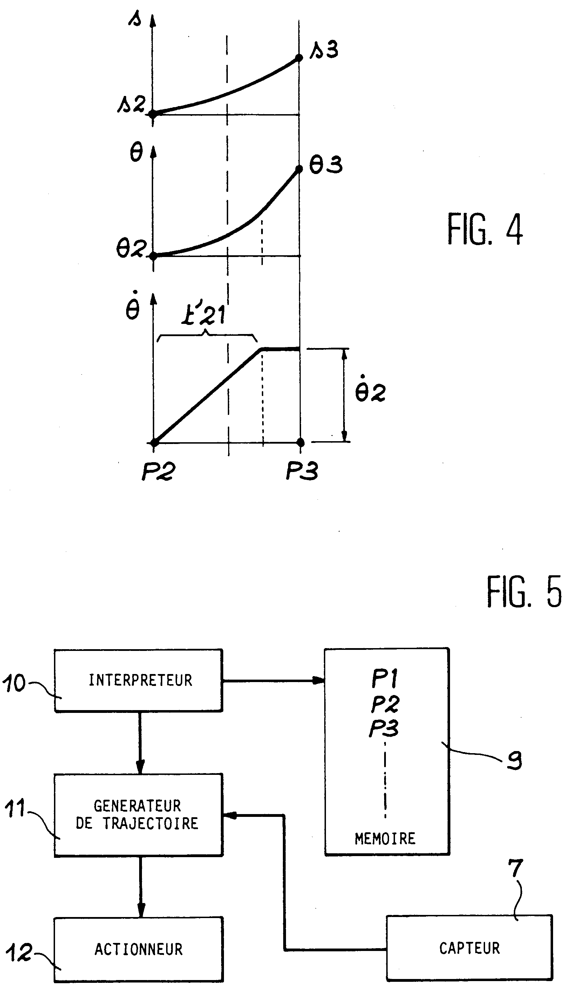

Le mouvement de déplacement linéaire, défini par des coordonnées cartésiennes, de l'outil 5 est choisi comme mouvement principal ou mouvement maître. On s'efforce de le parcourir aussi vite que possible en fonction de contraintes qui vont être évoquées à l'aide de la figure 5 à laquelle on se reporte momentanément.

Le système de pilotage du bras 4 comprend essentiellement un interpréteur 10 qui lit le contenu de la mémoire-programme 9 et transmet les instructions décodées à un générateur de trajectoire 11 sous forme de données utilisables par lui et des actionneurs 12 qui commandent le mouvement des articulations du bras 4 et que le générateur de trajectoire 11 commande.

La mémoire-programme 9 contient les instructions nécessaires pour décrire l'évolution du système robotisé à chaque point de passage P, c'est-à-dire les coordonnées de la position de ces points, l'orientation que l'outil 5 doit y avoir, et les informations concernant les tronçons intermédiaires et en particulier leur forme, rectiligne, circulaire ou autre. L'interpréteur 10 est programmé de manière à lire et transmettre les informations concernant un tronçon dès que le tronçon précédent commence à être parcouru : les informations concernant T2 et P3 sont par exemple connues quand l'outil 5 arrive au point de départ P1 ou immédiatement après.

On calcule d'abord une vitesse maximale, ici $V2_{max}$, à l'extrémité P2 du tronçon T1 qui est sur le point d'être parcouru : cette vitesse est calculée de telle sorte qu'il soit possible d'arrêter l'outil 5 à la fin du tronçon suivant T2, au point P3, car le système robotisé ignore si ce point ne sera pas le dernier de la trajectoire et il faut absolument éviter tous les dépassements de la trajectoire, aux conséquences imprévisibles. Comme il existe une accélération et une décélération maximales (en principe les mêmes en valeur absolue), qui sont imposées préalablement par la constitution mécanique du bras de robot 4 ou pour des raisons de sécurité ou de maintien de la coordination des divers mouvements d'articulation, $V2_{max}$ ne peut excéder la vitesse qui correspondrait à l'arrêt au point P3 par un mouvement à décélération maximale.

Une fois que $V2_{max}$ est calculée, on s'efforce de parcourir le tronçon T1 à une vitesse compatible avec les dimensions de la bavure, notée V0. Cette vitesse peut varier en temps réel. Le capteur 7 donnera les informations nécessaires pour optimiser V0, et la première phase de parcours consiste à parcourir le tronçon T1 à l'accélération maximale jusqu'à ce que cette vitesse soit atteinte. Comme le tronçon T1 est relativement long, il est a priori possible d'atteindre une vitesse V0 en accélérant à partir de la vitesse au point P1 (nulle dans le cas présent) pendant le temps t11.

La deuxième phase, parcourue pendant le temps t12, est à la vitesse V0, mais une vérification est faite à chaque cycle de fonctionnement de la machine et dès que le système de commande s'aperçoit qu'il faut décélérer pour ne pas dépasser la vitesse $V2_{max}$ au point P2, il le fait et la dernière étape est donc une étape de décélération maximale de V0 à $V2_{max}$ menée pendant le temps t13. Si V0 est inférieur à $V2_{max}$, cette décélération ne sera pas déclenchée.

Les informations concernant le tronçon T3 et le point P4 sont lues lorsque le parcours du tronçon T2 commence. Comme ce tronçon T3 est assez long, le système de commande constate qu'il y aura bien assez de temps pour arrêter l'outil 5 au point P4 même si le point P3 est atteint à la vitesse maximale V0. Le tronçon T2 est donc parcouru d'abord à l'accélération maximale pendant le temps t21 jusqu'à ce que la vitesse de l'outil 5 atteigne la vitesse maximale V0, qui est ensuite maintenue pendant le temps t22 jusqu'au point P3. Si le tronçon T2 avait été plus court encore, la vitesse V0 n'aurait pas été atteinte et il aurait été parcouru entièrement à l'accélération maximale. Le mouvement continue ensuite ; on constate qu'il est parcouru en pratique à une vitesse moyenne relativement proche de la vitesse maximale, ce qui serait loin d'être le cas si on devait arrêter l'outil 5 à chaque point de passage P.

Les autres mouvements du système, à savoir ici le mouvement d'orientation de l'outil 5, sont asservis en vitesse à celle du mouvement maître : on ne cherche pas à les accomplir à la vitesse maximale qui serait possible mais au contrainte à les synchroniser au mouvement principal. C'est ainsi que pendant le parcours du tronçon T2, si on désigne par s2 et s3 les abscisses curvilignes de l'outil 5 sur la trajectorie aux points P2 et P3 et par si l'abscisse curviligne en un point intermédiaire, et par $\theta2$, $\theta3$ et $\theta i$ les orientations de l'outil 5 aux mêmes points ou aux mêmes instants, on s'efforce de respecter la condition $(s3 - si)/(s3 - s2) = (\theta3 - \theta i)/(\theta3 - \theta2)$, c'est-à-dire que chacun des mouvements sur le même tronçon doit être parcouru avec une proportion identique au même instant. Cette condition est cependant parfois impossible à respecter car les variations de vitesse moyenne des mouvements asservis d'un tronçon à l'autre nécessitent souvent de dépasser l'accélération maximale autorisée pour ces mouvements. C'est ainsi que la vitesse de rotation de l'orientation de l'outil 5, qui est synchronisée sur V0 sur l'essentiel du tronçon T1, doit être modifiée sur le tronçon T2. Si le rayon de courbure est suffisamment petit, on ne peut atteindre une vitesse uniforme $\dot{\theta}2$ qu'après une phase de durée t'21 (illustrée à la figure 4), plus grande que t21 au cours de laquelle la vitesse de rotation $\dot{\theta}$ de l'outil 5 varie à l'accélération maximale. Ce n'est que vers la fin du tronçon T2 que la condition de synchronisation est rétablie. Cette condition est toujours atteinte au moins à une distance avant la fin du tronçon (dans ce cas P3) telle qu'il est ensuite possible de décélérer à une vitesse nulle. L'état du système correspondant à un point de passage est donc atteint en même temps pour chacun des mouvements ; pour les mouvements lents, par exemple pour un procédé d'ébavurage, les désynchronisations sont cependant peu importantes en pratique et généralement réduites au commencement des tronçons T. Elles n'apparaissent d'ailleurs pas forcément après chaque point de passage P.

Il reste à décrire plus concrètement la façon dont le mouvement asservi de rotation est accompli au cours d'un tronçon.

On calcule à chaque cycle de la machine, en fonction de l'orientation atteinte par l'organe, l'axe de rotation qui permettrait d'amener cet organe au point de passage P suivant par un simple mouvement de rotation. On impose alors à l'axe de rotation de l'organe une évolution à accélération maximale pour le faire converger vers l'axe de rotation calculé. On met en oeuvre le procédé à l'aide des formules qui suivent.

Si i désigne l'indice de la situation présente et j l'indice de la situation souhaitée, on calcule tout d'abord un axe de rotation défini par son vecteur unitaire WC(i) permettant de joindre une orientation souhaitée M(j) à partir de l'orientation actuelle M(i), c'est-à-dire qu'on résout une équation qui peut être symbolisée par WC(i) = AXE(M(i) , M(j)) où AXE est une fonction programmée dans le système de commande.

La transition de W(i) (axe de rotation actuel défini par son vecteur unitaire) à WC(i) en un seul cycle de machine, pendant un temps d'échantillonnage Tech, nécessiterait une accélération angulaire Sang"(i) égale à |WC(i) - W(i)|.(Sang'(i)/Tech) où Sang'(i) est la vitesse de rotation en cours. Si cette accélération Sang"(i) est accessible on obtiendra W(i+1)=WC(i) , c'est-à-dire que l'axe de rotation souhaité sera atteint en un seul cycle. Sinon, on aura :

$$W(i+1) = W(i) + WC(i) - W(i)/|WC(i) - W(i)| \ .$$

.Sang".(Tech/Sang'(i)) où Sang" est l'accélération maximale.

La rotation accomplie pendant le cycle est effectuée autour de l'axe W(i+1)/|W(i+1)| . La nouvelle orientation peut alors être calculée ainsi que le chemin qui reste à parcourir jusqu'à l'objectif. Les quantités entre barres verticales correspondent en fait aux normes de ces quantités.

Les logiciels de programmation des robots se prêtent facilement à la programmation de ce genre d'algorithme de convergence. Quand l'organe est placé avec son axe de rotation à l'orientation souhaitée, il ne reste plus qu'à lui imposer une rotation unique autour d'un axe fixe et on retombe dans le cas particulier évoqué avec l'outil 5.

L'invention peut être mise en oeuvre de bien des manières et notamment avec des mouvements asservis beaucoup plus nombreux qui peuvent concerner des constituants mécaniquement indépendants du système comme d'autres robots ou des solides mobiles mais inertes par ailleurs : tables, convoyeurs, etc. C'est même une situation où l'usage de l'invention est particulièrement avantageux. On peut aussi envisager plusieurs ordres d'asservissement, c'est-à-dire que certains mouvements ne seraient pas asservis au mouvement maître mais à des mouvements asservis à celui-ci. La vitesse maximale V0 peut être déterminée par de multiples causes : vitesse d'avance maximale de l'outil 5, raisons de sécurité, nécessité de rester coordonné à d'autres mécanismes plus lents, parmi d'autres.

**Revendications**

1. Procédé de génération de trajectoire pour un système robotisé (4) comprenant au moins un organe mobile (5), la trajectoire étant définie par une succession de tronçons (T) joints par des points de passage (P) où le système est à un état déterminé, la trajectoire étant obtenue par la superposition de plusieurs mouvements des organes mobiles, où un des mouvements est un mouvement principal pour lequel chaque tronçon est parcouru à une vitesse variable, variant à une accélération et une décélération maximales autorisées, comprenant les étapes suivantes : calcul d'une vitesse maximale (V2) à la fin (P2) du tronçon actuellement parcouru (T1), la vitesse maximale permettant d'arrêter les organes mobiles à la fin (P2) du tronçon suivant en les soumettant à la décélération maximale ; détermination d'une fin éventuelle du tronçon actuellement parcouru (T1) où les organes mobiles sont soumis à la décélaration maximale ; parcours du reste du tronçon actuellement parcouru à l'accélération maximale ou à une vitesse maximale autorisée (Vo) ; caractérisé en ce que les autres mouvements sont des mouvements asservis au mouvement principal et parcourus à des vitesses variables et calculées en fonction de la vitesse variable sur le mouvement principal de façon que la proportion de tronçon parcourue par chacun desdits mouvements asservis converge vers la proportion de tronçon parcourue au même instant par le mouvement principal, les mouvements asservis étant parcourus à une accélération ou décélération maximale respective jusqu'à ce que la proportion de tronçon parcourue par chacun d'eux coïncide avec la proportion de tronçon parcourue par le mouvement principal.

2. Procédé selon la revendication 1, caractérisé en ce que le mouvement principal est la position d'un organe du système robotisé et un mouvement asservi est l'orientation du même organe.

3. Procédé selon la revendication 2, caractérisé en ce que le mouvement asservi d'orientation de l'organe est accompli par une succession de déplacements de rotation, à l'accélération maximale et choisis pour faire converger l'axe de rotation de l'organe au début de chaque déplacement vers l'axe de rotation qui permettrait d'arriver à la fin du tronçon actuellement parcouru par un simple mouvement de rotation autour de cet axe.

## Claims

1. Process for generating a trajectory for a robotized system (4) comprising at least one mobile member (5), the trajectory being defined by a succession of sections (T) joined by passage points (P) where the system is at a given state, the trajectory being obtained by the superimposing of several movements of mobile members, where one of the movements is a main movement for which each section is covered at a variable speed varying at a maximum authorized acceleration and deceleration, comprising the following stages: calculating a maximum speed (V2) at the end (P2) of the presently covered section (T1), the maximum speed making it possible to stop the mobile members at the end (P2) of the following section by subjecting them to a maximum deceleration; and traversing the remaining presently covered section at maximum acceleration or at maximum authorized speed (Vo); characterized in that in that the other movements are movements dependent on the main movement and covered at variable speeds calculated as a function of the variable speed on the main movement, so that the proportion of the section covered by meah of these dependent movements converges towards the proportion of the section covered at the same instant by the main movement, the dependent movements being covered at a maximum acceleration or deceleration until the section proportion covered by each of them coincides with the section proportion covered by the main movement.

2. Process according to claim 1, characterized in that the main movement is the position of a member of the robotized system and a dependent movement is the orientation of the same member.

3. Process according to claim 2, characterized in that the dependent member orientation movement is accomplished by a succession of rotary displacements at maximum acceleration and chosen so as to bring about the convergence of the rotation axis of the member at the start of each displacement towards the rotation axis which would make it possible to arrive at the end of the section at present being covered by a simple rotary movement about the said axis.

## Patentansprüche

1. Verfahren zur Erzeugung einer Bewegungsbahn für ein robotisiertes System (4), das wenigstens ein bewegliches Organ (5) umfaßt, wobei die Bewegungsbahn definiert wird durch eine Aufeinanderfolge von Abschnitten (T), verbunden durch Durchgangspunkte (P), wo das System in einem bestimmten Zustand ist, die Bewegungsbahn erhalten wird durch die Überlagerung von mehreren Bewegungen der beweglichen Organe, wobei eine der Bewegungen eine Hauptbewegung ist, für die jeder Abschnitt mit einer variablen Geschwindigkeit durchlaufen wird, variierend mit einer zulässigen Maximalbeschleunigung und einer zulässigen Maximalverzögerung, die folgenden Schritte umfassend:
Berechnung einer Maximalgeschwindigkeit (V2) am Ende (P2) des aktuell durchlaufenen Abschnitts (T1), wobei die Maximalgeschwindigkeit ermöglicht, die beweglichen Organe am Ende (P2) des folgenden Abschnitts anzuhalten, indem man sie der Maximalverzögerung aussetzt; Festlegung eines eventuellen Endes des aktuell durchlaufenen Abschnitts (T1), wo die beweglichen Organe der Maximalverzögerung ausgesetzt werden; Durchlaufen des Rests des aktuell durchlaufenen Abschnitts mit der maximalen Beschleunigung oder mit einer zulässigen Maximalgeschwindigkeit (Vo); **dadurch gekennzeichnet,** daß die anderen Bewegungen von der Hauptbewegung abhängige Bewegungen sind und durchlaufen werden mit Geschwindigkeiten, die variabel sind und berechnet werden in Abhängigkeit von der variablen Geschwindigkeit der Hauptbewegung, so daß die von jeder der besagten abhängigen Bewegungen durchlaufene Abschnitts-Proportion sich der Abschnitts-Proportion nähert, die im gleichen Zeitpunkt durch die Hauptbewegung durchlaufen wird, wobei die abhängigen Bewegungen jeweils mit einer Maximalbeschleunigung oder -verzögerung durchlaufen werden, bis die durch jede von ihnen durchlaufene Abschnitts-Proportion übereinstimmt mit der durch die Hauptbewegung durchlaufenen Abschnitts-Proportion.

2. Verfahren nach Anspruch 1, dadurch gekennzeichnet, daß die Hauptbewegung die Position eines Organs des robotisierten Systems ist und die abhängige Bewegung die Ausrichtung desselben Organs ist.

3. Verfahren nach Anspruch 2, dadurch gekennzeichnet, daß die abhängige Ausrichtbewegung des Organs ausgeführt wird durch eine Folge von Rotationsverstellungen mit maximaler Beschleunigung und gewählt, um die Rotationsachse des Organs am Anfang von jeder Verstellung der Rotationsachse zu nähern, die ermöglichen wurde, durch eine einfache Rotationsbewegung um diese Achse zum Ende des aktuell durchlaufenen Abschnitts zu gelangen.

FIG. 1

FIG. 2

FIG. 3

8

FIG. 4

FIG. 5